# EUROPEAN PATENT APPLICATION

(11) **EP 4 556 943 A1**
(43) Date of publication of application: **21.05.2025**
(21) Application number: 24213576.2
(22) Date of filing: 18.11.2024
(51) Int. Cl.: G01S 7/40, G01S 7/497

(54) **SYSTEM FOR ACTIVE BORESIGHTING CORRECTION FOR EXTERNAL AIRCRAFT SENSORS**

(30) Priority: 16.11.2023 US 202318511590
(71) Applicant: Rockwell Collins, Inc., Cedar Rapids, IA 52498 (US)
(72) Inventor: REID, Alexander D., Tualatin, 97062-8456 (US); ROETHLER, Byron B., West Linn, 97068-4067 (US); HAN, David I., Lake Oswego, OR, 97034 (US); BURNS, Lincoln J, Tigard, 97223 (US)
(74) Representative: Dehns

(57) **Abstract**

A system for active boresight correction of aircraft mounted sensors includes inertial sensors (210) mounted proximate to aircraft sensors (206) rigidly coupled to structural components of an aircraft, the inertial sensors likewise rigidly coupled to the structural components and subject to substantially the same inflight motion and/or deformation as the structural components and aircraft sensors (which may affect the accuracy or precision of the aircraft sensors). Each inertial sensor determines a sensor boresight based on a proximate aircraft sensor and any inflight motion or deformation to which the aircraft sensor is subjected. The boresight correction system determines an angular offset of the sensor boresight relative to the aircraft boresight, allowing for real time or near real time correction for motion or deformation of any data sensed by the aircraft sensor.

## Description

### BACKGROUND

Alignment and/or calibration of aircraft-mounted sensors and sensor systems is a cumbersome, time-consuming, and expensive process. For example, radar sensing systems, enhanced vision system (EVS) sensing systems, proximity sensing systems, and other like sensors may depend on proper boresighting, or alignment with the orientation of the aircraft to which the sensors are mounted, such that any information reported by the sensors is interpreted and presented accurately and does not introduce hazardously misleading information (HMI).

The alignment of various external sensing systems, e.g., sensors or sensing systems mounted to an external surface or fuselage component of the aircraft is affected by, e.g., the aircraft boresight itself, sensor hardpoint installation accuracy, and the location of an inertial reference unit (IRU; also attitude and heading reference system (AHRS)) also attached to the aircraft. The aircraft boresight itself may be defined by the aircraft IRU, e.g., with respect to angular components of the aircraft, or its yaw, pitch, and roll axes (hence, a three-axis angular orientation). Sensors may be installed and aligned to an acceptable maximum tolerance for error.

An additional complicating factor is the rigidity of the aircraft fuselage itself. Generally, the aircraft IRU may be mounted in a centrally located wingbox, e.g., near the wing roots of the aircraft. However, the overall superstructure of the fuselage may be subject to distortion and/or motion relative to the wingbox. Whether taxiing on the ground, climbing or descending inflight, or touching down at the destination, different components throughout the fuselage may droop, vibrate, flex, or otherwise move in ways that may vary according to the current flight segment. Any angular deviation of an external sensor from the aircraft boresight may affect the sensor alignment, which in turn may affect the accuracy of sensed information. Further, sensor misalignment may require costly and time-consuming sensor realignment or recalibration.

### SUMMARY

In a first aspect, a system for active boresight correction of an aircraft sensor is disclosed. In embodiments, the system includes an aircraft inertial reference unit (IRU) rigidly mounted to the aircraft in a stable location, the IRU reporting a boresight orientation (e.g., a three-axis angular orientation) of the aircraft. The system includes an inertial sensor (e.g., inertial measurement unit (IMU)) rigidly coupled to an aircraft sensor (e.g., positioning sensor, imaging sensor), the aircraft sensor in turn rigidly coupled to a structural component of the aircraft (e.g., wing, tail, landing gear, nose, rotor) and subject to inflight motion or deformation that may affect the precision or accuracy of the sensor relative to the aircraft IRU (which is relatively protected from such deformation). The inertial sensor, likewise affected by said motion/deformation determines a local boresight orientation for the aircraft sensor. The active boresight correction system (e.g., periodically, in real time) monitors the local sensor boresight and the aircraft boresight orientation, correcting the local sensor boresight (e.g., continually, periodically, as needed) by determining an offset from the aircraft boresight and correcting at least one axis of the three-axis angular orientation based on the determined offset.

In some embodiments, the aircraft sensor is disposed at a wingtip or on a wing of the aircraft.

In some embodiments, the aircraft sensor is disposed on landing gear of the aircraft.

In some embodiments, the aircraft sensor includes a radome or is rigidly mounted to a radome.

In some embodiments, the aircraft sensor is a camera or image sensor. For example, the camera may be externally mounted to provide an environmental view or mounted within the cockpit and oriented at a pilot, e.g., for headtracking.

In some embodiments, the aircraft is a fixed-wing aircraft, rotorcraft, or unmanned aircraft system (UAS).

In some embodiments, the aircraft sensor is one of a group of sensors comprising a distributed aperture system (DAS). For example, the active boresight correction system may correct and correlate sensor boresights for each of a group of sensors comprising the DAS.

In some embodiments, the aircraft sensor is a radar array or antenna element thereof.

In some embodiments, the three-axis angular orientation includes a pitch axis, roll axis, and/or yaw axis of the aircraft or aircraft sensor.

In a further aspect, a self-correcting aircraft-based sensor system is disclosed. The sensor system includes one or more aircraft sensors, each sensor rigidly coupled to a structural component of the aircraft (which may be subject to inflight motion and/or deformation which may otherwise affect the accuracy or precision of the aircraft sensor). Each aircraft sensor includes an inertial sensor coupled to the aircraft sensor (and thus subject to the same motion and/or deformation), the inertial sensor capable of determining a local sensor boresight of the aircraft sensor, e.g., a three-axis angular orientation of the sensor. An active boresight correction system receives an aircraft boresight determined by an aircraft-based inertial reference unit (IRU), e.g., centrally and/or stably disposed within the aircraft fuselage so as to avoid inflight motion and/or deformation. The active boresight correction system determines an offset of each local sensor boresight relative to the aircraft boresight and corrects one or more of the local sensor boresights (e.g., via correcting at least one axis of the associated three-axis angular orientation) based on the determined boresight offset.

In some embodiments, the aircraft sensors include wingtip-based or wing-based sensors.

In some embodiments, the aircraft sensors include landing gear-based sensors.

In some embodiments, the aircraft sensors include a sensor incorporating a radome or rigidly mounted to a radome.

In some embodiments, the aircraft sensors include a camera and/or image sensors.

In some embodiments, the aircraft-based sensor system is embodied in a fixed-wing aircraft, rotorcraft, or unmanned aircraft system (UAS).

In some embodiments, the aircraft sensor system is associated with a distributed aperture system (DAS). For example, the active boresight correction system may correct and correlate sensor boresights for each of a group of sensors comprising the DAS.

In some embodiments, the aircraft sensors include radar arrays or antenna elements thereof.

In some embodiments, the three-axis angular orientation includes a pitch axis, roll axis, and/or yaw axis of the aircraft or aircraft sensor.

In a still further aspect, an aircraft-based method for active boresight correction of an aircraft sensor rigidly mounted to a structural component of an aircraft is disclosed. In embodiments, the method includes determining a sensor boresight indicative of a three-axis angular orientation of the aircraft sensor via an inertial sensor rigidly coupled to the aircraft sensor. The method includes determining, via a centrally and/or stably mounted aircraft inertial reference unit (IRU) rigidly coupled to the aircraft, an aircraft boresight orientation indicative of a three-axis angular orientation of the aircraft. The method includes receiving, via a processor of an active boresight correction system, the aircraft boresight and sensor boresight. The method includes determining, via the processor, an angular boresight offset of the sensor boresight relative to the aircraft boresight (e.g., the offset due to inflight motion and/or deformation of the structural component to which the aircraft sensor is mounted. The method includes correcting the sensor boresight with respect to at least one axis (e.g., of the three-axis angular orientation) based on the determined boresight offset.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a profile illustration of an aircraft incorporating aircraft sensors disposed in various locations on the aircraft fuselage according to example embodiments of this disclosure;
FIG. 2 is a block diagram of an aircraft-based system for active boresight correction of aircraft-based sensors according to example embodiments of this disclosure;
FIG. 3 is an illustration of a radome-based implementation of the aircraft-based system of FIG. 2;
FIG. 4 is an illustration of a cockpit-based implementation of the aircraft-based system of FIG. 2;
FIG. 5 is a rotorcraft-based and distributed aperture system (DAS)-based implementation of the aircraft-based system of FIG. 2;
and FIG. 6 is a flow diagram illustrating an aircraft-based method for correcting a boresight of an aircraft-based sensor according to example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to systems for active boresight correction of external sensors and sensor systems mounted to an aircraft fuselage or external surface. Said sensors and sensor systems may be subject to distortion or other motion inflight relative to the aircraft IRU, which may result in real-time sensor misalignment and require later reinstallation or recalibration of the sensors. Local inertial measurement units track localized motion and/or deformation of a component or surface relative to the aircraft IRU in real time, providing instant correction of any misalignment due to said localized motion and/or deformation.

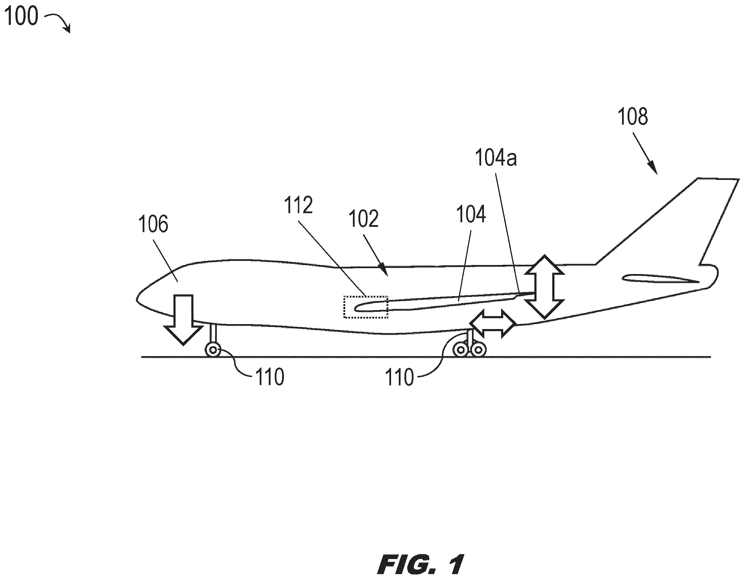

Referring now to FIG. 1, an aircraft 100 is shown. The aircraft 100 may include fuselage 102, wings 104, nose/cockpit area 106, tail assembly 108, and landing gear 110.

In embodiments, the aircraft 100 may include fixed-wing aircraft, rotorcraft, or unmanned aircraft systems (UAS; also unmanned aerial vehicles (UAV)). For example, the aircraft 100 may be a fixed-wing aircraft incorporating a variety of sensors mounted to various structural components and/or external surfaces of the aircraft fuselage 102. For example, sensors may be mounted at or near the wingtips 104a on either wing 104; to the tail assembly 108; to, or inside, the nose or cockpit area 106; to the landing gear 110; or elsewhere on the fuselage 102. Aircraft sensors may include imaging sensors, radar systems, proximity sensors, alpha vanes (e.g., angle of attack (AoA) sensors, AoA vanes), pitot probes (e.g., pitot tubes, pitot-static systems) and any appropriate like sensing device mountable to a structural component of the aircraft 100 and capable of providing sensed data to aircraft-based systems or subsystems. In some embodiments, aircraft sensors throughout the aircraft structure may feed into a flight management system (FMS) or other like automated flight control system.

In embodiments, an aircraft IRU may be rigidly mounted in a wingbox 112 of the aircraft 100 (e.g., or other like stable and/or central location within the fuselage 102). For example, the aircraft IRU may maintain an aircraft boresight indicative of a three-axis angular orientation of the aircraft, e.g., with respect to its pitch, roll, and yaw axes and relative to an origin boresight or orientation (e.g., 0, 0, 0). In embodiments, prior to commencing fulfillment of a flight plan, each external aircraft sensor may be aligned or calibrated relative to the aircraft boresight. For example, installation, alignment, and/or calibration (e.g., "boresighting") of the aircraft sensors may be performed when the aircraft 100 is on the ground 114, e.g., at the gate or otherwise not in motion of any kind, and not subject to any type of inflight distortion or deformation of the fuselage 102 or of any external surfaces or components.

In embodiments, fuselage components of the aircraft 100 may be subject to various types of inflight distortion, deformation, or movement relative to the aircraft IRU. For example, the nose/cockpit area 106 may droop (116) relative to the fuselage 102 inflight. U.S. Patent No. 9,541,763 discloses boresight correction of a nose-mounted heads-up display (HUD) to compensate for nose droop 116. Further, the nose/cockpit area 106 may be subject to deformation due to wind pressure. In some embodiments, the wings 104 may be subject to inflight deformation, e.g., flexing (118) of the wingtips 104a, which may persist but vary inflight depending upon a variety of factors, e.g., angle of attack, current flight segment, weather and atmospheric conditions. Still further, the landing gear 110 may be subject to vibration once deployed. In some embodiments, e.g., if the aircraft 100 is capable of extremely high speeds, the aircraft fuselage or components thereof may be subject to expansion and/or contraction inflight; similarly, the fuselage and skin may be subject to bending, wrinkling, or buckling.

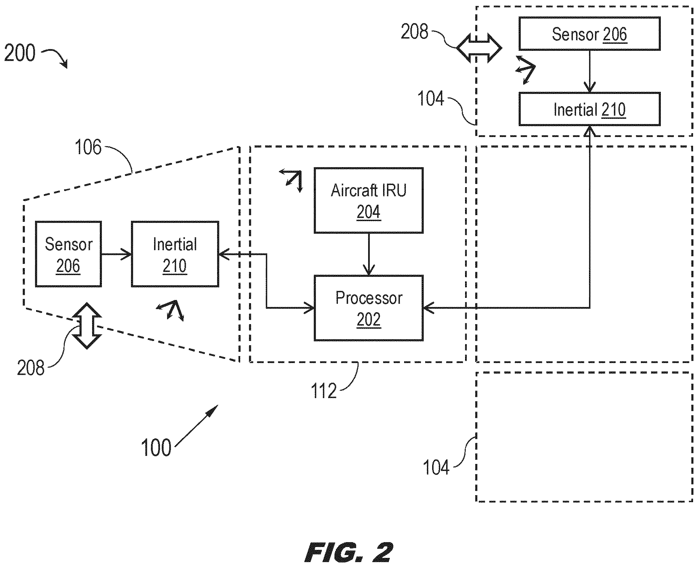

Referring to FIG. 2, a system 200 for active sensor boresight correction aboard the aircraft 100 is shown.

In embodiments, the system 200 may include a processor 202. For example, the processor 202 may be disposed anywhere aboard the aircraft 100. In embodiments, the processor 202 may receive aircraft boresight information from the aircraft IRU 204 (which may be disposed, e.g., within a wingbox 112 or like centrally located and/or relatively stable portion of the aircraft fuselage (102, FIG. 1).

In embodiments, each aircraft sensor 206 disposed within, or on, a fuselage component (e.g., nose/cockpit area 106, wing 104, an external surface) subject to inflight deformation or movement (208; e.g., nose droop (116, FIG. 1), wing flex (118, FIG. 1)) relative to the wingbox 112 may have an inertial sensor 210 (e.g., inertial measurement unit (IMU), sensor angular orientation detector) proximate thereto. For example, each inertial sensor 210 may be disposed within or on the same fuselage component as its corresponding aircraft sensor 206, such that the inertial sensor may be subject to substantially the same inflight deformation or movement 208 as the aircraft sensor. In embodiments, each inertial sensor 210 may continually determine a sensor boresight indicative of the current three-axis angular orientation of the aircraft sensor. For example, each inertial sensor 210 may continually return updated sensor boresight information to the processor 202. Further, the processor 202 may (periodically or continually) compare a sensor boresight with a coterminous or current aircraft boresight, thereby determining a boresight offset, e.g., a magnitude to which the sensor boresight deviates from the aircraft boresight. In embodiments, as different aircraft sensors 206 disposed in or on different fuselage components may be subject to different types of inflight deformation or movement 208 (e.g., based on their relative location, based on the structure of the aircraft 100, based on the current flight segment, based on weather or atmospheric conditions), the sensor boresights reported by various inertial sensors 210 may deviate from the aircraft boresight in different ways.

In embodiments, having determined a boresight offset from the aircraft boresight for one or more aircraft sensors 206, the processor 202 may correct the sensor boresight for each aircraft sensor based on its determined boresight offset. For example, with respect to millimeter-wave radar antenna elements disposed on the landing gear (110, FIG. 1), any proximity or directional data based on energy transmitted and received (e.g., reflected by one or more targets) by the antenna elements may be corrected based on the current boresight offset of the landing gear with respect to the aircraft boresight.

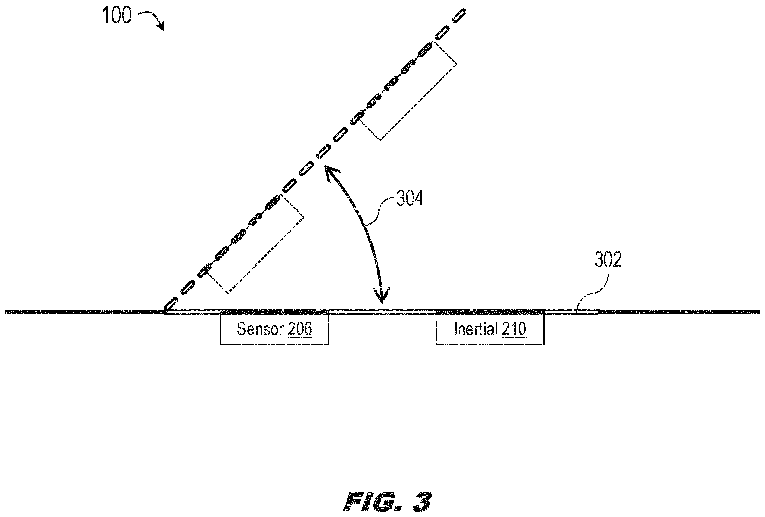

Referring now to FIG. 3, the aircraft 100 is shown.

In embodiments, the aircraft sensor 206 may include a radome 302, or the aircraft sensor may be rigidly mounted to the radome. For example, the radome 302 may partially or fully obscure components of the aircraft sensor 206 but allow electromagnetic (EM) energy to pass through the radome, e.g., selected radio frequency (RF) bands or subbands. With respect to conventional aircraft sensors incorporating radomes, the radomes may be opened and closed in order to service the sensor components underneath. Such repeated opening and closing (304) of the radome 302 may result in sufficient deformation of the radome as to affect the precision of the underlying aircraft sensor 206.

In embodiments, the inertial sensor 210 may be likewise disposed on or proximate to the radome 302 so as to account for any deformation of the radome with respect to the sensor boresight determined by the inertial sensor. By correcting the sensor boresight (e.g., or any underlying data sensed by the aircraft sensor 206) in real time or near real time for any motion or deformation of the radome 302, the frequency with which the radome itself must be serviced, repaired, or replaced may be significantly reduced.

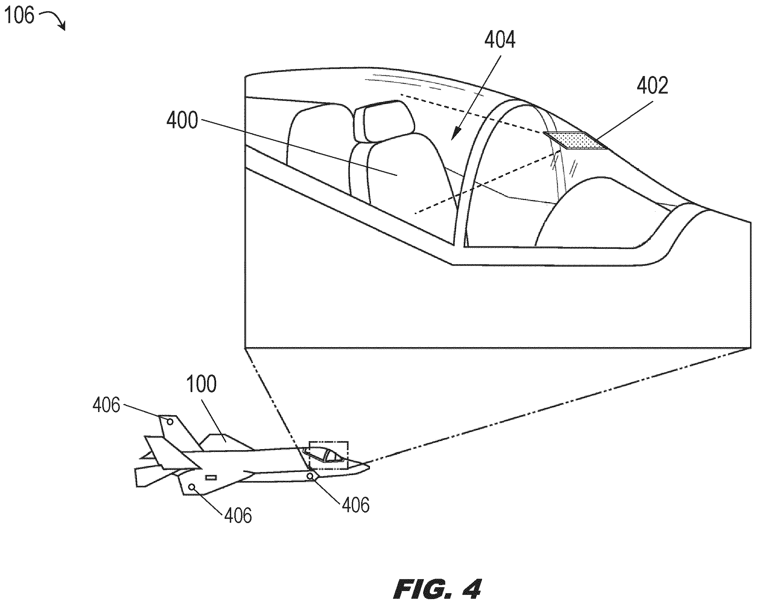

Referring now to FIG. 4, the nose/cockpit area 106 of the aircraft 100 is shown.

In embodiments, a pilot or operator of the aircraft 100 may wear and use a head-mounted display (HMD) while operating the aircraft, e.g., and seated in a pilot seat 400 within the nose/cockpit area 106. For example, instead of heads-up display (HUD), the HMD may be embodied in a visor or a helmet worn by the pilot. Further, as the pilot moves their head (and the visor or helmet attached thereto), the HMD may track changes in head position and orientation (head pose) relative to the aircraft 100, such that visual information displayed by the HMD to the pilot (e.g., enhanced vision systems (EVS) or synthetic vision systems (SVS) wherein sensed imagery is fused with explanatory symbology and/or graphical enhancement) precisely reflects the correct head pose at any given moment (e.g., and hazardously misleading information (HMI) is not displayed).

In embodiments, the HMD system may include a camera 402 attached to the nose/cockpit area 106 and oriented (404) toward the pilot seat 400. For example, the camera 402 may capture images depicting the head pose of the pilot as well as fiducial markers disposed within the nose/cockpit area 106. Based on the head pose of the pilot relative to a platform frame of reference corresponding to the aircraft 100, imagery displayed by the HMD system may be correctly oriented. In some embodiments, the HMD system may further determine a head pose of the pilot relative to an earth-centered reference frame (e.g., based on the aircraft boresight relative to a global navigation satellite system (GNSS) driven frame equivalent absolute or earth-centered reference frame) such that other positional imagery or symbology in the earth-centered reference frame may be presented in an accurate and non-hazardous fashion and properly aligned with platform-frame visual information. However, inflight deformation and/or movement (208, FIG. 2) may affect the precision of inertial measurement units (IMU), positioning sensors, imaging sensors, and other like sensors subject to deformation or movement. If visual information presented by the HMD system is dependent on the rigid attachment of the camera 402 to the nose/cockpit area 106, and the equivalence of the camera and platform frames of reference, inflight deformation and/or movement 208 may result in the presentation of HMI to the pilot.

In some embodiments, the camera 402 may include an inertial sensor 210 configured for determining a camera boresight in real time or near real time, such that the processors 202 can correct for any deviation of the camera boresight from the aircraft boresight as measured by the aircraft IRU (204, FIG. 2). Further, other cameras or imaging sensors 406 disposed elsewhere on the aircraft, e.g., other external surfaces and/or structural components, and providing external and/or environmental images for processing or display to the pilot, e.g., via synthetic vision, enhanced vision, and/or combined vision systems, may likewise include inertial sensors 210 for determining a camera boresight correctible by the processors 202.

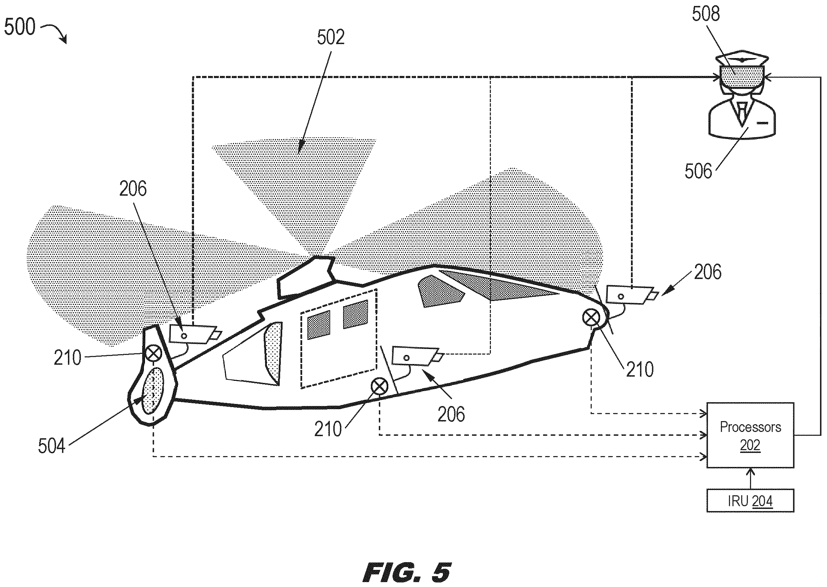

Referring now to FIG. 5, a rotorcraft 500 is shown.

In embodiments, the rotorcraft 500 may be subject to different types of inflight deformation and/or motion (208, FIG. 2) than would a fixed wing aircraft (e.g., flexing of the tail boom due to the action of the main rotor 502 and tail rotor/s 504). However, the rotorcraft 500 may likewise incorporate an aircraft IRU (204, FIG. 2) disposed within a central stable location within the rotorcraft fuselage. In embodiments, the rotorcraft 500 may likewise incorporate aircraft sensors 206, e.g., in the nose, tail boom, skids, or other structural components. For example, each aircraft sensor 206 may likewise incorporate an inertial sensor (210, FIG. 2) rigidly coupled to the aircraft sensor and providing real-time sensor boresight information for correction against the aircraft boresight measured by the aircraft IRU 204.

In embodiments, the rotorcraft 500, as well as the aircraft 100, may incorporate an onboard distributed aperture system (DAS) comprising a network of aircraft sensors 206 positioned around the fuselage (102, FIG. 1) or mounted to other structural components of the aircraft as described above. For example, the aircraft sensors may include imaging sensors (e.g., visible light, infrared) capable of producing high-resolution imagery fused to provide comprehensive visual profile to the pilot or operator 506 (e.g., via an HMD 508, as disclosed by FIG. 4), such that the pilot can identify terrain, landmarks, and/or targets in daytime, nighttime, or degraded visual environments (DVE), including the ability to see through the aircraft fuselage 102 and identify terrain directly below the aircraft 100. Further, the DAS network of aircraft sensors 206 may provide pilots 506 with an overhead view of the aircraft 100, e.g., during ground-based taxiing phases while the aircraft must be directed along runways and taxiways while evading other aircraft and other ground-based obstacles.

In embodiments, the processor 202 may monitor, corroborate, and/or correct sensor boresights for all aircraft sensors 206 within the DAS network of sensors based on a coterminous or current aircraft boresight as measured by the aircraft IRU 204 and corrective sensor information forwarded by a corresponding network of inertial sensors 210.

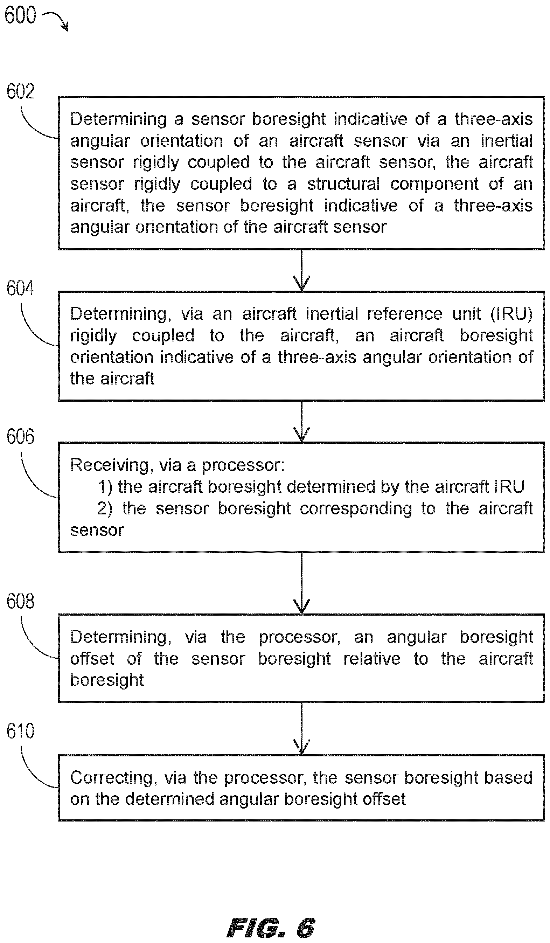

Referring now to FIG. 6, the method 600 may be implemented by the aircraft 100 and/or the rotorcraft 500 and may include the following steps.

At a step 602, an inertial sensor (e.g., inertial measurement unit (IMU)) or angular orientation detector rigidly coupled to an aircraft sensor determines a sensor boresight indicative of a three-axis angular orientation of the sensor. For example, the aircraft sensor may be rigidly attached to an external surface and/or structural component of the aircraft (e.g., wingtip, wing, landing gear, skid, tail boom, tail empennage, cockpit, nose), the external surface or structural component prone to inflight deformation and/or movement.

At a step 604, an aircraft inertial reference unit (IRU), e.g., disposed in a central and/or stable location within the aircraft fuselage, determines an aircraft boresight indicative of a three-axis angular orientation of the aircraft.

At a step 606, a system for active boresight correction receives the sensor boresight and aircraft boresight.

At a step 608, the active boresight correction system determines an angular boresight offset of the sensor boresight based on, and relative to, the aircraft boresight. For example, based on the disposition of the various sensors and the propensity of the structural components wherein the said sensors are disposed to inflight deformation and/or motion, sensor boresights may continually deviate from the aircraft boresight throughout the course of the flight (and, e.g., depending on the particular flight segment and/or location, different sensor boresights may deviate from the aircraft boresight in different ways at different times.

At a step 610, the active boresight correction system corrects the sensor boresight based on the determined angular boresight offset of the sensor boresight relative to the aircraft boresight.

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A system for active boresight correction of an aircraft sensor, comprising:
an aircraft inertial reference unit, IRU, (204) rigidly coupled with the aircraft, the aircraft IRU configured to determine an aircraft boresight indicative of a three-axis angular orientation of the aircraft;
an inertial sensor (210) rigidly coupled to an aircraft sensor (206), the aircraft sensor rigidly coupled to a structural component of the aircraft, the inertial sensor configured to determine a sensor boresight indicative of a three-axis angular orientation of the aircraft sensor;
and
a processor (202) coupled with the aircraft sensor, the aircraft IRU, and the inertial sensor, the processor configured to:
receive the aircraft boresight from the aircraft IRU;
receive the sensor boresight from the inertial sensor;
determine an angular boresight offset of the sensor boresight relative to the aircraft boresight with respect to at least one axis of the three-axis angular orientation;
and
correct the sensor boresight based on the determined angular boresight offset with respect to at least one axis of the three-axis angular orientation.

2. The system for active boresight correction of claim 1, wherein the structural component corresponds to a wingtip of the aircraft; or wherein the structural component corresponds to landing gear of the aircraft.

3. The system for active boresight correction of claim 1 or 2, wherein:
the aircraft sensor (206) either includes a radome (302) or is mounted to a radome;
and
the inertial sensor (210) is rigidly coupled to the radome.

4. The system for active boresight correction of claim 1, 2 or 3, wherein the aircraft sensor (206) is an image sensor or camera; and/or wherein the aircraft is selected from a group including a fixed-wing aircraft, a rotorcraft, and an unmanned aircraft system, UAS.

5. The system for active boresight correction of any preceding claim, wherein the aircraft sensor (206) is a first aircraft sensor and the inertial sensor (210) is a first inertial sensor, further comprising:
at least one second aircraft sensor;
and
at least one second inertial sensor rigidly coupled to each second aircraft sensor and coupled to the processor (202);
wherein the first aircraft sensor and the at least one second aircraft sensor are associated with a distributed aperture system.

6. The system for active boresight correction of any preceding claim, wherein the aircraft sensor (206) includes a radar array comprising at least one antenna element; and/or wherein the three-axis angular orientation is associated with a pitch axis, a roll axis, and a yaw axis.

7. An aircraft-based active sensor system capable of self-correction of a sensor boresight relative to an aircraft boresight, the aircraft boresight indicative of a three-axis angular orientation of an aircraft, the aircraft having an aircraft inertial reference unit, IRU, (204) configured to determine the aircraft boresight, the active sensor system comprising:
at least one aircraft sensor (206) rigidly coupled to a structural component of the aircraft;
at least one inertial sensor (210) rigidly coupled to each aircraft sensor, each inertial sensor configured to determine a sensor boresight indicative of a three-axis angular orientation of the corresponding aircraft sensor;
and
a processor (202) coupled with the aircraft IRU and the at least one inertial sensor, the processor configured to:
receive the aircraft boresight from the aircraft IRU;
receive the sensor boresight from each inertial sensor;
determine an angular boresight offset of each sensor boresight relative to the aircraft boresight with respect to at least one axis of the three-axis angular orientation;
and
correct at least one sensor boresight with respect to at least one axis of the three-axis angular orientation, based on the determined angular boresight offset for the corresponding aircraft sensor.

8. The aircraft-based active sensor system of claim 7, wherein the at least one aircraft sensor (206) includes at least one wingtip-based sensor coupled to a wingtip of the aircraft.

9. The aircraft-based active sensor system of claim 7 or 8, wherein the structural component corresponds to landing gear of the aircraft.

10. The aircraft-based active sensor system of claim 7, 8 or 97, wherein:
the at least one aircraft sensor (206) includes at least one first aircraft sensor either including a radome (302) or mounted to a radome;
and
the at least one inertial sensor (210) angular orientation detector includes at least one first inertial sensor rigidly coupled to the radome.

11. The aircraft-based active sensor system of any of claims 7 to 10, wherein the at least one aircraft sensor (206) includes an image sensor or camera; and/or wherein the aircraft is selected from a group including a fixed-wing aircraft, a rotorcraft, and an unmanned aircraft system, UAS.

12. The aircraft-based active sensor system of any of claims 7 to 11, wherein the at least one aircraft sensor (206) is associated with a distributed aperture system.

13. The aircraft-based active sensor system of any of claims 7 to 12, wherein the at least one aircraft sensor (206) includes a radar array comprising at least one antenna element.

14. The aircraft-based active sensor system of any of claims 7 to 13, wherein the three-axis angular orientation is associated with a pitch axis, a roll axis, and a yaw axis.

15. An aircraft-based method for correcting a boresight for an aircraft sensor disposed on a structural component of an aircraft, the method comprising:
determining a sensor boresight indicative of a three-axis angular orientation of an aircraft sensor via an inertial sensor rigidly coupled to the aircraft sensor, the aircraft sensor rigidly coupled to a structural component of an aircraft, the sensor boresight indicative of a three-axis angular orientation of the aircraft sensor;
determining, via an aircraft inertial reference unit, IRU, rigidly coupled to the aircraft, an aircraft boresight orientation indicative of a three-axis angular orientation of the aircraft;
receiving, via a processor, 1) the aircraft boresight determined by the aircraft IRU and 2) the sensor boresight corresponding to the aircraft sensor;
determining, via the processor, an angular boresight offset of the sensor boresight relative to the aircraft boresight;
and
correcting, via the processor, at least one axis associated with the sensor boresight based on the determined angular boresight offset.
